# EUROPÄISCHE PATENTSCHRIFT

(11) **EP 3 366 509 B1**
(45) Veröffentlichungstag und Bekanntmachung des Hinweises auf die Patenterteilung: **18.10.2023**
(21) Anmeldenummer: 17169773.3
(22) Anmeldetag: 05.05.2017
(51) Int. Cl.: B60N 2/07, F16D 69/00, B60N 2/12, B60N 2/08, F16D 69/04, F16D 63/00

(54) **SCHIENENANORDNUNG FÜR EINEN LÄNGSEINSTELLER UND FAHRZEUGSITZ**
RAIL ASSEMBLY FOR A LENGTH ADJUSTER AND VEHICLE SEAT
SYSTÈME DE RAIL POUR UN DISPOSITIF DE RÉGLAGE EN LONGUEUR ET SIÈGE DE VÉHICULE

(30) Priorität: 23.02.2017 DE 102017202983
(43) Veröffentlichungstag der Anmeldung: 29.08.2018
(73) Patentinhaber: KEIPER Seating Mechanisms Co., Ltd., Shanghai, 201315 (CN)
(72) Erfinder: UTZINGER, Karl, 66919 Weselberg (DE); MIZERSKI, Piotr, 67657 Kaiserslautern (DE)
(74) Vertreter: Kutzenberger Wolff & Partner

(56) Entgegenhaltungen:
- EP-A2- 1 959 152
- DE-A1- 2 611 078
- DE-A1-102010 022 005
- FR-A1- 2 907 386
- US-A- 4 351 885

## Beschreibung

Die Erfindung betrifft eine Schienenanordnung für einen Längseinsteller eines Fahrzeugsitzes. Die Erfindung betrifft weiterhin einen Fahrzeugsitz.

Im Stand der Technik sind verschiedene Schienenanordnungen bekannt, welche eine Längsverstellung eines Fahrzeugsitzes ermöglichen, um den Sitz beispielsweise zwischen einer oder mehreren Gebrauchspositionen und einer Easy-Entry-Position zu verstellen.

Aus der DE 10 2010 022 005 A1 und der FR 2 907 386 A1 sind Schienenanordnungen zur Längsverstellung jeweils eines Fahrzeugsitzes bekannt.

Aufgabe der vorliegenden Erfindung ist es, eine verbesserte Schienenanordnung für einen Längseinsteller, welche insbesondere auch bei großer Geschwindigkeit oder großer Sitzmasse ein Abstoppen des zu verstellenden Fahrzeugsitzes ermöglicht, sowie einen verbesserten Fahrzeugsitz anzugeben.

Hinsichtlich der Schienenanordnung wird die Aufgabe erfindungsgemäß mit den in Anspruch 1 angegebenen Merkmalen gelöst. Hinsichtlich des Fahrzeugsitzes wird die Aufgabe erfindungsgemäß mit den in Anspruch 15 angegebenen Merkmalen gelöst.

Vorteilhafte Weiterbildungen der Erfindung sind Gegenstand der Unteransprüche.

Eine Schienenanordnung für einen Längseinsteller eines Fahrzeugsitzes umfasst mindestens ein Sitzschienenpaar mit wenigstens zwei Sitzschienen, wobei eine Sitzschiene fahrzeugfest ausgebildet ist und eine andere Sitzschiene beweglich und zu der fahrzeugfesten Sitzschiene verschiebbar ist und wobei zumindest eine der Sitzschienen auf einer Kontaktfläche zu einer Bremseinrichtung einen Reibbelag aufweist.

Mittels des Reibbelags in einem Kontaktbereich zur Bremseinrichtung kann der Fahrzeugsitz bei einer Verstellung, insbesondere bei einer Längsverstellung, besser aufgrund Reibschlusses zwischen Reibbelag und Bremseinrichtung abgebremst werden.

Dabei wird eine zum Abstoppen des Fahrzeugsitzes erforderliche Reibungskraft zwischen der Bremseinrichtung und der Sitzschiene gegenüber konventionellen Schienenanordnungen mittels eines auf den Reibbelag mittels der Bremseinrichtung applizierten Anpressdrucks erhöht.

Gemäß einer Ausgestaltung der Erfindung umfasst die Bremseinrichtung ein Reibrad und/oder ein Bremselement, wobei die zum Abstoppen des Fahrzeugsitzes erforderliche Reibungskraft mittels eines auf den Reibbelag über das Reibrad und/oder das Bremselement applizierten Anpressdrucks erzeugbar ist. Damit kann eine erhöhte Reibungskraft auf einfache Art und Weise mittels eines Formschlusses zwischen dem Reibrad und der fahrzeugfesten Sitzschiene und/oder dem Bremselement und der fahrzeugfesten Sitzschiene erzeugt werden.

Gemäß einer weiteren Ausgestaltung der Erfindung ist der Reibbelag form- und/oder kraft- und/oder stoffschlüssig auf oder in einer der Bremseinrichtung zugewandten Seitenwand der fahrzeugfesten Sitzschiene angeordnet oder anordenbar.

Beispielsweise ist der Reibbelag formschlüssig, z. B. mittels einer Klett- oder Klemmverbindung, auf die fahrzeugfeste Sitzschiene aufgebracht. Dazu ist beispielsweise ein bandförmiger Reibbelag, insbesondere ein L- oder C-förmiger Streifen, der mit dem Reibbelag versehen ist, auf die fahrzeugfeste Sitzschiene geklemmt, gerastet oder geklipst. Alternativ kann der Reibbelag form- und kraftschlüssig, beispielsweise mittels einer Pressverbindung, auf die fahrzeugfeste Sitzschiene aufgebracht sein. Denkbar ist auch, den Reibbelag stoffschlüssig mit der zweiten Sitzschiene zu verbinden, beispielsweise mittels einer Klebeverbindung oder Haftverbindung durch Aufspritzen eines bestimmten Materials.

Der Reibbelag ist gemäß einer ersten Ausführungsform als eine auf der Seitenwand angeordnete oder anordenbare Beschichtung ausgebildet. Beispielsweise ist der Reibbelag als eine auf die Seitenwand der fahrzeugfesten Sitzschiene aufgespritzte Farb- und/oder Materialschicht ausgebildet.

Gemäß einer zweiten Ausführungsform ist der Reibbelag als ein in der Seitenwand angeordnetes oder anordenbares wellenförmiges Profil ausgebildet, welches beispielsweise mittels Rändelung auf die Seitenwand der fahrzeugfesten Sitzschiene eingebracht ist.

Gemäß einer dritten Ausführungsform ist der Reibbelag als eine auf der Seitenwand angeordnete oder anordenbare Kornschicht ausgebildet. Beispielsweise ist die Kornschicht eine Sandschicht. Die Kornschicht ist z. B. auf einem Klebeband und das Klebeband auf der Seitenwand aufgebracht. Alternativ kann die Kornschicht direkt auf die Seitenwand aufgebracht, insbesondere geklebt, werden.

Gemäß einer vierten Ausführungsform ist der Reibbelag als ein an der Seitenwand angeordnetes oder anordenbares Materialband mit einer Reiboberfläche ausgebildet. Beispielsweise ist das Materialband ein Kunststoffband und weist zusätzlich eine aufgeraute Oberfläche auf.

Gemäß einer fünften Ausführungsform ist der Reibbelag als ein auf der Seitenwand angeordnetes oder anordenbares Metallband ausgebildet. Das Metallband weist insbesondere eine strukturierte Oberfläche, beispielsweise eine Rändelung, auf. Das Metallband kann als ein Stahlband aus rostfreiem Stahl ausgebildet sein.

Gemäß einer siebten Ausführungsform ist der Reibbelag analog zur sechsten Ausführungsform als ein Metallband ausgebildet, wobei das Metallband hierbei ein Aluminiumband ist.

Gemäß einer achten Ausführungsform ist der Reibbelag ebenfalls ein Metallband, wobei das Metallband eine Oberflächenprofilierung aufweist, die beispielsweise mittels einer aufgeklebten oder aufgespritzten Sandkörnung ausgebildet wird.

Ferner ist ein Fahrzeugsitz vorgesehen, welcher ein Sitzteil, eine Lehne und einen mit dem Sitzteil verbundenen Längseinsteller mit einer Schienenanordnung gemäß der vorhergehenden Beschreibung umfasst.

Mittels des Längseinstellers ist ein Abstoppen des Fahrzeugsitzes beim Längsverstellen desselben gegenüber konventionellen Fahrzeugsitzen verbessert.

Ausführungsbeispiele der Erfindung werden anhand von Zeichnungen näher erläutert. Dabei zeigen:
- Figur 1: schematisch eine Seitenansicht eines Fahrzeugsitzes mit einem erfindungsgemäßen Längseinsteller,
- Figur 2: schematisch eine perspektivische Darstellung eines erfindungsgemäßen Ausführungsbeispiels eines Längseinstellers,
- Figur 3: schematisch in perspektivischer Darstellung einen Längseinsteller für einen Fahrzeugsitz,
- Figur 4: schematisch in Draufsicht von vorne den Längseinsteller,
- Figuren 5 bis 12: schematisch perspektivische Ansichten einer äußeren Seitenwand einer Sitzschiene für einen Längseinsteller mit einem Reibbelag in verschiedenen Ausführungsformen.

Einander entsprechende Teile sind in allen Figuren mit den gleichen Bezugszeichen versehen.

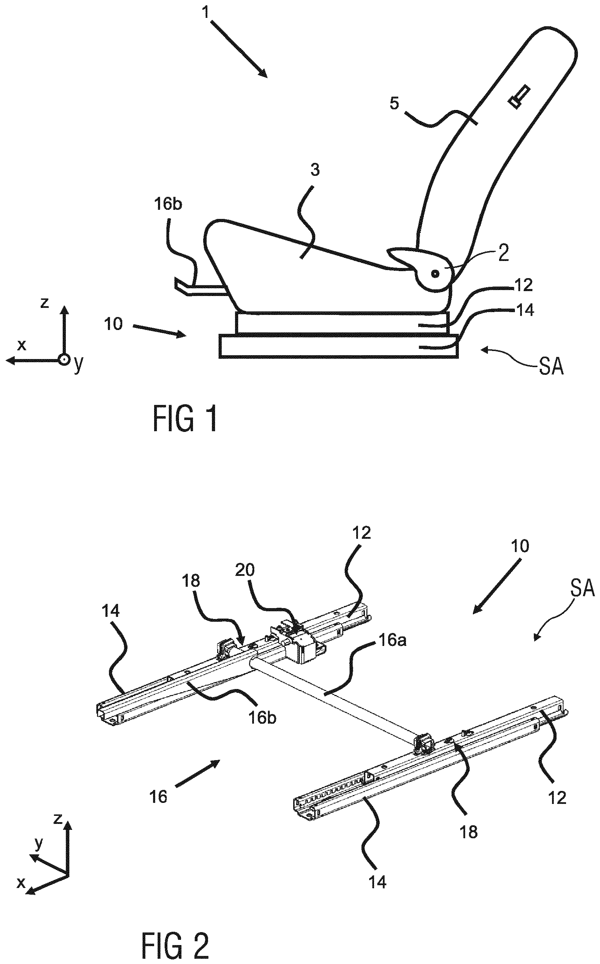

Ein in **Figur 1** schematisch in Seitenansicht dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 5 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Der in **Figur 1** gezeigte Fahrzeugsitz 1 für ein Kraftfahrzeug weist ein Sitzteil 3 und eine relativ zum Sitzteil 3 in ihrer Neigung einstellbare Lehne 5 auf. Die Neigung der Lehne 5 kann beispielsweise mittels eines Beschlags 2, insbesondere mittels eines Rastbeschlages oder eines Getriebebeschlages, einstellbar sein. Der Fahrzeugsitz 1 ist zur Einstellung einer Sitzlängsposition, d. h. parallel zur Längsrichtung x, auf einem Längseinsteller 10 montiert.

Der in **Figur 2** näher gezeigte Längseinsteller 10 weist eine Sitzschienenanordnung SA mit zwei Sitzschienenpaaren auf. Jeweils ein Sitzschienenpaar ist aus einer ersten Sitzschiene 12, insbesondere einer sitzfesten Oberschiene, und einer zweiten Sitzschiene 14, insbesondere einer fahrzeugfesten Unterschiene, gebildet. Die Sitzschienen 12, 14 eines jeden Sitzschienenpaares umgreifen einander wechselseitig und sind in Längsrichtung x relativ zueinander beweglich.

**Figur 2** zeigt den Längseinsteller 10 schematisch in einer perspektivischen Einzeldarstellung.

Die ersten Sitzschienen 12 und die zweiten Sitzschienen 14 des jeweiligen Sitzschienenpaares sind mittels einer Schienenverriegelung 18 miteinander verriegelbar, wobei zur gemeinsamen Betätigung der beiden Schienenverriegelungen 18 eine Betätigungseinrichtung 16 mit einer die beiden Schienenverriegelungen 18 wirkverbindenden Übertragungsstange 16a vorgesehen ist, welche sich parallel zur Horizontalrichtung y erstreckt. Die Betätigungseinrichtung 16 weist ferner einen an der Übertragungsstange 16a angreifenden Handgriff 16b (siehe ebenfalls Figur 1) auf, welcher sich parallel zur Längsrichtung x erstreckt.

Ferner weist der Längseinsteller 10 eine Memory-Vorrichtung 20 auf.

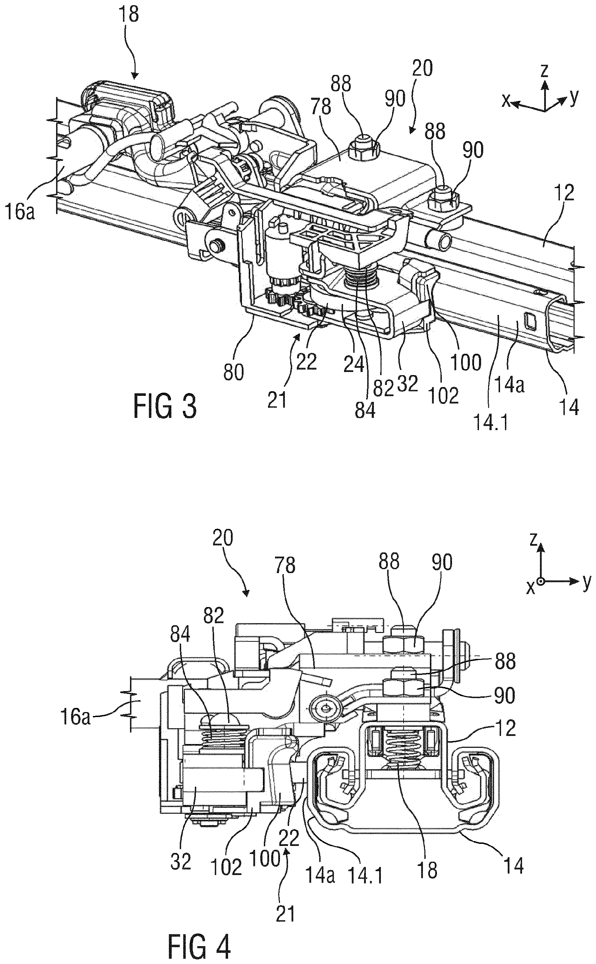

**Figuren 3 und 4** zeigen jeweils schematisch eine Teilansicht eines Sitzschienenpaares des Längseinstellers 10 im Bereich der Memory-Vorrichtung 20 und der Schienenverriegelung 18 in verschiedenen Ansichten. Insbesondere zeigen **Figur 3** den Bereich des Sitzschienenpaares in einer perspektivischen Ansicht und **Figur 4** in einer Draufsicht von vorne.

Die Memory-Vorrichtung 20 ist der ersten Sitzscheine 12 zugeordnet und wirkt mit der zweiten Sitzschiene 14 zusammen. Die Memory-Vorrichtung 20 ist beispielsweise fest mit der ersten Sitzschiene 12 verbunden. Vorliegend ist die Memory-Vorrichtung 20 mittels beispielsweise an der ersten Sitzschiene 12 befestigten Gewindebolzen 88 und Muttern 90 montiert.

Mittels der Memory-Vorrichtung 20 ist eine von einer als Memory-Position bezeichneten Sitzlängsposition ausgehende Relativbewegung zwischen der ersten Sitzschiene 12 und der zweiten Sitzschiene 14 erfassbar. Hierzu weist die Memory-Vorrichtung 20 als eine Bremseinrichtung 21 beispielsweise ein Reibrad 22 auf, welches eine relativ zur Memory-Vorrichtung 20 bewegbare Kontaktfläche 14a der zweiten Sitzschiene 14 kontaktiert und abfährt. Das Reibrad 22 ist in einer Reibradschwinge 32 drehbar gelagert. Die Memory-Vorrichtung 20 weist ferner ein aus einem ersten Gehäuseteil 78 und einem zweiten Gehäuseteil 80 gebildetes Gehäuse auf.

Das Reibrad 22 wird in der Memory-Position durch einen Stift, zum Beispiel einen Sperrbolzen 82, blockiert und stoppt in Kombination mit einem sich dabei auf die zweite Sitzschiene 14 absenkenden Bremselement 100, insbesondere einem Bremsklotz. Der Sperrbolzen 82 ist mit einer nicht näher dargestellten Ausnehmung, insbesondere einem bogenförmigen Schlitz, in einer Felge 24 des Reibrades 22 in Eingriff bringbar. Der Sperrbolzen 82 ist mittels eines Federelementes 84 in Richtung einer Freigabestellung, in welcher der Sperrbolzen 82 außer Eingriff mit der Ausnehmung der Felge 24 ist, vorgespannt.

Das Bremselement 100 ist beispielsweise mittels eines Adapters 102 gehalten. Das Bremselement 100 erstreckt sich vorliegend im Wesentlichen über die gesamte Erstreckung der Reibradschwinge 32 in Vertikalrichtung z. Folglich ist das Bremselement 100 vorliegend breiter als das Reibrad 22. Das Bremselement 100 kann aus einem Kunststoff, insbesondere aus einem Elastomer, gefertigt sein.

Der Adapter 102 ist mittels Fixierelemente an der Reibradschwinge 32 befestigt. Hierbei kann eine Befestigung an einem unteren Arm der im Querschnitt U-förmigen Reibradschwinge 32 ausreichen. Auf dem gegenüberliegenden oberen Arm der Reibradschwinge 32 ist kein Fixierelement erforderlich.

Unmittelbar vor einem Erreichen oder Wiedererreichen der Memory-Position wird der Sperrbolzen 82 betätigt, wodurch das Reibrad 22 blockiert, sobald eine in Drehrichtung hintere Begrenzung der Ausnehmung mit dem Sperrbolzen 82 in Anlage gelangt ist. Bei einer derartigen Blockierung des Reibrades 22 bewirkt das Reibrad 22 aufgrund seiner Lagerung in der Reibradschwinge 32 über den Sperrbolzen 82 ein Moment auf die Reibradschwinge 32, wodurch das Reibrad 22 stärker gegen eine Kontaktfläche 14a der zweiten Schiene 14 gedrückt wird. Anders ausgedrückt, wird hierdurch die Andruckkraft des Reibrades 22 auf die Kontaktfläche 14a erhöht und eine Abrollbewegung des Reibrades 22 entlang der Kontaktfläche 14a der zweiten Sitzschiene 14 abgebremst, wodurch ein Verschieben der ersten Sitzschiene 12 relativ zur zweiten Sitzschiene 14 in Richtung der Memory-Position abgestoppt wird und ein Verschieben der ersten Sitzschiene 12 über die Memory-Position hinaus insbesondere erschwert oder verhindert ist.

Die Reibradschwinge 32 ist mittels einer aus darstellungstechnischen Gründen nicht gezeigten Feder unter einer Erzeugung einer Andruckkraft zwischen dem Reibrad 22 und der Kontaktfläche 14a in Richtung der Kontaktfläche 14a der zweiten Sitzschiene 14 federbelastet. Hierdurch kann die Memory-Vorrichtung 20 während eines Zustandes, in welchem der Fahrzeugsitz 1 in seiner Bewegung nicht abgebremst und blockiert werden soll, zur Beaufschlagung des Reibrades 22 mit einer vergleichsweise geringeren Andruckkraft eingerichtet sein, welche lediglich ein unerwünschtes Abheben des Reibrades 22 von der Kontaktfläche 14a verhindert und ein sicheres Erfassen der Relativbewegung der ersten Sitzschiene 12 relativ zur zweiten Sitzschiene 14 ermöglicht. Ferner dient dies einem Schutz eines unbeabsichtigten Abhebens des Reibrades 22 von der Kontaktfläche 14a, wodurch Klappergeräusche entstehen können.

Ein beabsichtigtes Abheben des Reibrades 22 von der Kontaktfläche 14a kann ferner beispielsweise mittels eines nicht dargestellten Reset-Mechanismus erfolgen, wobei die Memory-Vorrichtung 20 mittels einer beispielsweise auf ein Getriebe wirkenden Rückstellfeder auf einen einer Memory-Position entsprechenden Nullwert zurücksetzbar ist. Ein derartiger Reset ist beispielsweise bei einem manuellen Einstellen einer neuen Sitzlängsposition durchführbar.

Darüber hinaus weist eine der Kontaktfläche 14a zugewandte Oberfläche des Bremselements 100 einen vorbestimmten Winkel relativ zur Kontaktfläche 14a auf, wenn das Reibrad 22 beweglich ist, bzw. nicht blockiert ist. Im Falle eines Blockierens des Reibrades 22 neigt sich die Reibradschwinge 32, aufgrund einer Elastizität des Schienenpaares und der Memory-Vorrichtung 20, mit ihrem stirnseitigen Ende in Richtung der Kontaktfläche 14a und führt das Bremselement 100 dieser Bewegung folgend mit sich. Hierbei ist das Bremselement 100 mit der Kontaktfläche 14a in Kontakt bringbar, wobei sich, je nach Neigungswinkel der Reibradschwinge 32, die von dem Bremselement 100 kontaktierte Kontaktfläche 14a erhöht. Das Bremselement 100 ist derart an der Reibradschwinge 32 gehalten, dass es bei blockiertem Reibrad 22 entsprechend mit einem Teil einer generierten Normalkraft an die Kontaktfläche 14a angedrückt wird.

Folglich wird eine Aufteilung der Normalkraft auf das Reibrad 22 und auf das Bremselement 100 bewirkt, wodurch das Reibrad 22 im Vergleich zu einer Abbremsvorrichtung mit einem Reibrad 22 ohne zusätzliches Bremselement 100 entlastet ist. Zudem weist das Bremselement 100 eine größere Kontaktfläche zur Kontaktfläche 14a der zweiten Sitzschiene 14 als eine Kontaktfläche des Reibrads 22 auf und kann folglich höhere Normalkräfte aufnehmen, insbesondere ohne zu plastifizieren.

Die Reibung zwischen dem Reibrad 22 und dem Bremselement 100 sowie der zweiten Sitzschiene 14 bestimmt dabei die zum Abstoppen erreichbare Reibungskraft. Diese Reibungskraft zwischen dem Reibrad 22 und dem Bremselement 100 sowie der zweiten Sitzschiene 14 muss insbesondere gleich oder größer als die beim Abstoppen aufgrund von einer Verstellgeschwindigkeit des Fahrzeugsitzes 1 und/oder der Sitzmasse auftretenden Kräfte sein.

Ferner weist die zweite Sitzschiene 14 zur Erhöhung der Reibung zwischen der Bremseinrichtung 21 und der zweiten Sitzschiene 14, insbesondere dem Reibrad 22 und dem Bremselement 100 sowie der zweiten Sitzschiene 14, im Kontaktbereich der Kontaktfläche 14a zusätzlich einen Reibbelag 14b auf. Insbesondere ist der Reibbelag 14b auf einer äußeren Seitenwand 14.1 der zweiten Sitzschiene 14 angeordnet, welche der Bremseinrichtung 21, insbesondere dem Reibrad 22 und/oder dem Bremselement 100, zugewandt ist. Die äußere Seitenwand 14.1 ist zudem dem gegenüberliegenden Schienenpaar des Fahrzeugsitzes 1 zugewandt.

Durch einen solchen Reibbelag 14b zwischen der zweiten Sitzschiene 14 und dem Reibrad 22 sowie der zweiten Sitzschiene 14 und dem Bremselement 100 kann der Fahrzeugsitz 1 bei einer Verstellung besser abgebremst werden.

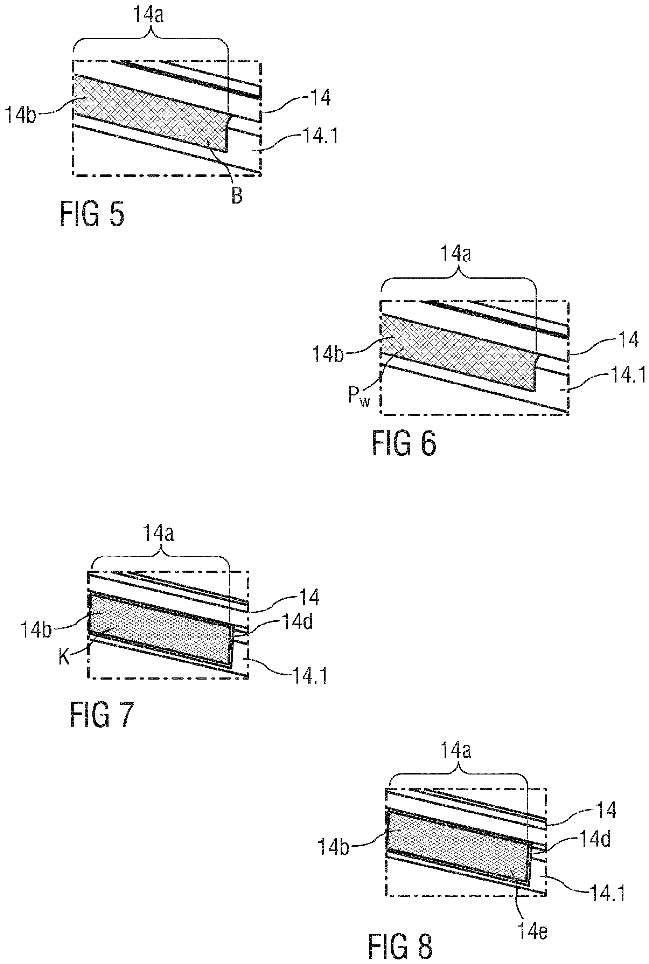

**Figuren 5 bis 12** zeigen verschiedene Ausführungsformen für den Reibbelag 14b.

**Figur 5** zeigt einen Abschnitt der zweiten Sitzschiene 14 mit einer ersten Ausführungsform des Reibbelages 14b in einer perspektivischen Darstellung.

Der Reibbelag 14b ist hierbei als eine Beschichtung B ausgebildet. Zum Beispiel ist der Reibbelag 14b als eine auf die äußere Seitenwand 14.1 der zweiten Sitzschiene 14 aufgespritzte Farb- und/oder Materialschicht ausgebildet.

**Figur 6** zeigt einen Abschnitt der zweiten Sitzschiene 14 mit einer zweiten Ausführungsform des Reibbelages 14b in einer perspektivischen Darstellung.

In der zweiten Ausführungsform ist der Reibbelage 14b in Form eines wellenförmigen Profils P_{w}, ausgebildet, welches auf die äußere Seitenwand 14.1 der zweiten Sitzschiene 14 eingebracht ist.

**Figur 7** zeigt einen Abschnitt der zweiten Sitzschiene 14 mit einer dritten Ausführungsform des Reibbelages 14b in einer perspektivischen Darstellung.

Hierbei ist der Reibbelag 14b als eine Kornschicht K, insbesondere eine Sandschicht, ausgebildet. Dabei können zur Ausbildung der Kornschicht K Kornpartikel auf einem Klebeband 14c und das Klebeband 14c auf der äußeren Seitenwand 14.1 der zweiten Sitzschiene 14 aufgebracht sein. Alternativ können zur Ausbildung der Kornschicht K Kornpartikel direkt auf die äußere Seitenwand 14.1 der zweiten Sitzschiene 14 aufgebracht, insbesondere geklebt, werden.

**Figur 8** zeigt einen Abschnitt der zweiten Sitzschiene 14 mit einer vierten Ausführungsform des Reibbelages 14b in einer perspektivischen Darstellung.

Der Reibbelag 14b ist hierbei als ein Materialband 14d, insbesondere als ein Kunststoffband, mit einer Reiboberfläche 14e ausgebildet.

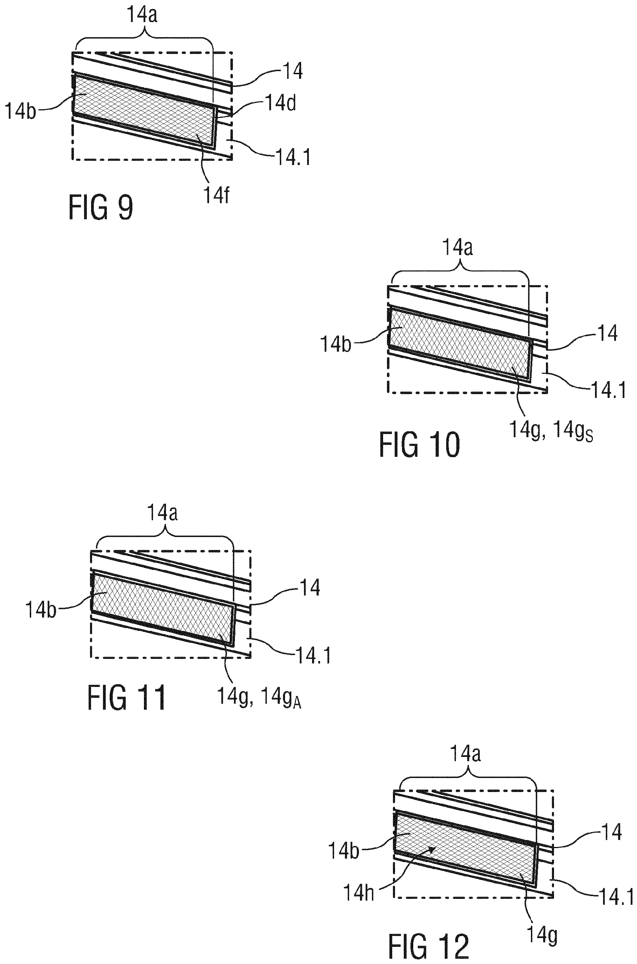

**Figur 9** zeigt einen Abschnitt der zweiten Sitzschiene 14 mit einer fünften Ausführungsform des Reibbelages 14b in einer perspektivischen Darstellung.

Der Reibbelag 14b ist hierbei analog zur vierten Ausführungsform gemäß **Figur 8** ausgebildet, wobei das Materialband 14d zusätzlich eine aufgeraute Oberfläche 14f aufweist.

**Figur 10** zeigt einen Abschnitt der zweiten Sitzschiene 14 mit einer sechsten Ausführungsform des Reibbelages 14b in einer perspektivischen Darstellung.

Der Reibbelag 14b ist als ein Metallband 14g ausgebildet, welches eine strukturierte Oberfläche aufweist. Das Metallband 14g ist hierbei als ein Stahlband 14gs aus rostfreiem Stahl ausgebildet.

**Figur 11** zeigt einen Abschnitt der zweiten Sitzschiene 14 mit einer siebten Ausführungsform des Reibbelages 14b in einer perspektivischen Darstellung.

Der Reibbelag 14b ist analog zur sechsten Ausführungsform als ein Metallband 14g ausgebildet, welches eine strukturierte Oberfläche aufweist. Jedoch ist das Metallband 14g hierbei als ein Aluminiumband 14g_{A} ausgebildet.

**Figur 12** zeigt einen Abschnitt der zweiten Sitzschiene 14 mit einer achten Ausführungsform des Reibbelages 14b in einer perspektivischen Darstellung.

Der Reibbelag 14b ist hierbei ebenfalls ein Metallband 14g mit einer Oberflächenprofilierung 14h ausgebildet, wobei die Oberflächenprofilierung 14h beispielsweise mittels einer aufgeklebten oder aufgespritzten Sandkörnung ausgebildet wird.

Der jeweilige Reibbelag 14b kann dabei beispielsweise formschlüssig, beispielsweise mittels einer Klett- oder Klemmverbindung auf die zweite Sitzschiene 14 aufgebracht sein. Insbesondere kann ein bandförmiger Reibbelag 14b, insbesondere ein L- oder C-förmiger Streifen, der mit dem Reibbelag 14b versehen ist, auf die zweite Sitzschiene 14 geklemmt, gerastet oder geklipst sein. Alternativ kann der Reibbelag 14b form- und kraftschlüssig beispielsweise durch eine Pressverbindung auf die zweite Sitzschiene 14 aufgebracht sein. Eine weitere Möglichkeit besteht darin, den Reibbelag 14b stoffschlüssig mit der zweiten Sitzschiene 14 zu verbinden, beispielsweise mittels einer Klebeverbindung oder Haftverbindung durch aufgespritztes Material.

Die erhöhende Reibungskraft infolge des Reibbelages 14b zwischen dem Reibrad 22 und der zweiten Sitzschiene 14 und/oder dem Bremselement 100 und der zweiten Sitzschiene 14 wird insbesondere mittels Formschluss, insbesondere durch Anpressen oder Andrücken des Reibrades 22 und/oder des Bremselementes 100 auf die Kontaktfläche 14a der zweiten Sitzschiene 14 bewirkt.

Die in der vorstehenden Beschreibung und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Fahrzeugsitz
- 2: Beschlag
- 3: Sitzteil
- 5: Lehne
- 10: Längseinsteller
- 12: erste Sitzschiene
- 14: zweite Sitzschiene
- 14.1: äußere Seitenwand
- 14a: Kontaktfläche
- 14b: Reibbelag
- 14c: Klebeband
- 14d: Materialband
- 14e: Reiboberfläche
- 14f: aufgeraute Oberfläche
- 14g: Metallband
- 14g_{S}: Stahlband
- 14g_{A}: Aluminiumband
- 14h: Oberflächenprofilierung
- 16: Betätigungseinrichtung
- 16a: Übertragungsstange
- 16b: Handgriff
- 18: Schienenverriegelung
- 20: Memory-Vorrichtung
- 21: Bremseinrichtung
- 22: Reibrad
- 24: Felge
- 32: Reibradschwinge
- 78: erstes Gehäuseteil
- 80: zweites Gehäuseteil
- 82: Sperrbolzen
- 84: Federelement
- 88: Gewindebolzen
- 90: Mutter
- 100: Bremselement
- 102: Adapter

- x: Längsrichtung
- y: Querrichtung
- z: Vertikalrichtung

- B: Beschichtung
- K: Kornschicht
- P_{w}: wellenförmiges Profil
- SA: Schienenanordnung

## Patentansprüche

1. Schienenanordnung (SA) für einen Längseinsteller (10) eines Fahrzeugsitzes (1), umfassend mindestens ein Sitzschienenpaar mit wenigstens zwei Sitzschienen (12, 14), wobei
eine Sitzschiene (14) fahrzeugfest ausgebildet ist und eine andere Sitzschiene (12) beweglich und zu der fahrzeugfesten Sitzschiene (14) verschiebbar ist,
**dadurch gekennzeichnet, daß** zumindest eine der Sitzschienen (12, 14) auf einer Kontaktfläche (14a) zusätzlich einen Reibbelag (14b) in einem Kontaktbereich zu einer Bremseinrichtung (21) aufweist, wobei der Fahrzeugsitz (1) durch eine erforderliche Reibungskraft zwischen der Bremseinrichtung (21) und einer der Sitzschienen (12, 14), die gegenüber konventionellen Schienenanordnungen mittels eines auf den Reibbelag (14b) mittels der Bremseinrichtung (21) applizierten Anpressdrucks erhöht ist, abstoppbar ist.

2. Schienenanordnung (SA) nach Anspruch 1, wobei eine, insbesondere höhere Reibungskraft mittels des auf den Reibbelag (14b) über die Bremseinrichtung (21) applizierten Anpressdrucks erzeugbar ist.

3. Schienenanordnung (SA) nach Anspruch 1 oder 2, wobei
- die Bremseinrichtung (21) ein Reibrad (22) und/oder ein Bremselement (100) aufweist, und
- die Reibungskraft mittels eines auf den Reibbelag (14b) über das Reibrad (22) und/oder das Bremselement (100) applizierten Anpressdrucks erzeugbar ist.

4. Schienenanordnung (SA) nach einem der vorhergehenden Ansprüche, wobei der Reibbelag (14b) form- und/oder kraft- und/oder stoffschlüssig auf oder in einer der Bremseinrichtung (21) zugewandten Seitenwand (14.1) der fahrzeugfesten Sitzschiene (14) angeordnet oder anordenbar ist.

5. Schienenanordnung (SA) nach einem der vorhergehenden Ansprüche, wobei der Reibbelag (14b) als eine auf der Seitenwand (14.1) angeordnete oder anordenbare Beschichtung (B) ausgebildet ist.

6. Schienenanordnung (SA) nach einem der vorhergehenden Ansprüche, wobei der Reibbelag (14b) als ein in der Seitenwand (14.1) angeordnetes oder anordenbares wellenförmiges Profil (P_{w}) ausgebildet ist.

7. Schienenanordnung (SA) nach einem der vorhergehenden Ansprüche, wobei der Reibbelag (14b) als eine auf der Seitenwand (14.1) angeordnete oder anordenbare Kornschicht (K) ausgebildet ist.

8. Schienenanordnung (SA) nach Anspruch 7, wobei
die Kornschicht (K) auf ein Klebeband (14c) aufgebracht ist und das Klebeband (14c) auf der Seitenwand (14.1) aufgebracht ist.

9. Schienenanordnung (SA) nach einem der vorhergehenden Ansprüche, wobei der Reibbelag (14b) als ein an der Seitenwand (14.1) angeordnetes oder anordenbares Materialband (14d) mit einer Reiboberfläche (14e) ausgebildet ist.

10. Schienenanordnung (SA) nach Anspruch 9, wobei das Materialband (14d) zusätzlich eine aufgeraute Oberfläche (14f) aufweist.

11. Schienenanordnung (SA) nach einem der vorhergehenden Ansprüche, wobei der Reibbelag (14b) als ein auf der Seitenwand (14.1) angeordnetes oder anordenbares Metallband (14g) ausgebildet ist.

12. Schienenanordnung (SA) nach Anspruch 11, wobei das Metallband (14g) ein Stahlband (14g_{S}) ist.

13. Schienenanordnung (SA) nach Anspruch 11, wobei das Metallband (14g) ein Aluminiumband (14g_{A}) ist.

14. Schienenanordnung (SA) nach einem der Ansprüche 11 bis 13, wobei das Metallband (14g) eine Oberflächenprofilierung (14h) aufweist.

15. Fahrzeugsitz (1), umfassend ein Sitzteil (3), eine Lehne (5) und einen mit dem Sitzteil (3) verbundenen Längseinsteller (10) mit einer Schienenanordnung (SA) nach einem der vorhergehenden Ansprüche.

## Claims

1. Rail arrangement (SA) for a longitudinal adjuster (10) of a vehicle seat (1), comprising at least one pair of seat rails with at least two seat rails (12, 14), wherein one seat rail (14) is fixed on the vehicle and another seat rail (12) is movable and displaceable with respect to the seat rail (14) fixed on the vehicle, **characterized in that** at least one of the seat rails (12, 14) additionally has, on a contact surface (14a), a friction lining (14b) in a contact region with a brake device (21), wherein the vehicle seat (1) can be stopped by a required frictional force between the brake device (21) and one of the seat rails (12, 14), the frictional force being increased in relation to conventional rail arrangements by means of a contact pressure applied to the friction lining (14b) by means of the brake device (21).

2. Rail arrangement (SA) according to Claim 1, wherein an, in particular higher, frictional force can be produced by means of the contact pressure applied to the friction lining (14b) via the brake device (21).

3. Rail arrangement (SA) according to Claim 1 or 2, wherein
- the brake device (21) has a friction wheel (22) and/or a brake element (100), and
- the frictional force can be produced by means of a contact pressure applied to the friction lining (14b) via the friction wheel (22) and/or the brake element (100).

4. Rail arrangement (SA) according to one of the preceding claims, wherein the friction lining (14b) is arranged or can be arranged in a form-fitting and/or force-fitting and/or integrally bonded manner on or in a side wall (14.1) of the seat rail (14) fixed on the vehicle, the side wall facing the brake device (21).

5. Rail arrangement (SA) according to one of the preceding claims, wherein the friction lining (14b) is in the form of a coating (B) which is arranged or can be arranged on the side wall (14.1).

6. Rail arrangement (SA) according to one of the preceding claims, wherein the friction lining (14b) is in the form of a wavy profile (P_{W}) which is arranged or can be arranged in the side wall (14.1).

7. Rail arrangement (SA) according to one of the preceding claims, wherein the friction lining (14b) is in the form of a layer of grain (K) which is arranged or can be arranged on the side wall (14.1).

8. Rail arrangement (SA) according to Claim 7, wherein the layer of grain (K) is attached to an adhesive tape (14c) and the adhesive tape (14c) is applied to the side wall (14.1).

9. Rail arrangement (SA) according to one of the preceding claims, wherein the friction lining (14b) is in the form of a material strip (14d) which has a friction surface (14e) and is arranged or can be arranged on the side wall (14.1).

10. Rail arrangement (SA) according to Claim 9, wherein the material strip (14d) additionally has a roughened surface (14f).

11. Rail arrangement (SA) according to one of the preceding claims, wherein the friction lining (14b) is in the form of a metal strip (14g) which is arranged or can be arranged on the side wall (14.1).

12. Rail arrangement (SA) according to Claim 11, wherein the metal strip (14g) is a steel strip (14g_{S}).

13. Rail arrangement (SA) according to Claim 11, wherein the metal strip (14g) is an aluminium strip (14g_{A}).

14. Rail arrangement (SA) according to one of Claims 11 to 13, wherein the metal strip (14g) has a surface profiling (14h).

15. Vehicle seat (1), comprising a seat part (3), a backrest (5) and a longitudinal adjuster (10), which is connected to the seat part (3), with a rail arrangement (SA) according to one of the preceding claims.

## Revendications

1. Agencement de rails (SA) pour un dispositif de réglage longitudinal (10) d'un siège de véhicule (1), comprenant au moins une paire de rails de siège avec au moins deux rails de siège (12, 14), un rail de siège (14) étant réalisé de façon à être fixe par rapport au véhicule et un autre rail de siège (12) étant mobile et déplaçable par rapport au rail de siège (14) fixe par rapport au véhicule,
**caractérisé en ce que**
au moins l'un des rails de siège (12, 14) présente en outre, sur une surface de contact (14a), une garniture de friction (14b) dans une zone de contact avec un dispositif de freinage (21), le siège de véhicule (1) étant apte à être arrêté par une force de friction nécessaire entre le dispositif de freinage (21) et l'un des rails de siège (12, 14), qui est augmentée par rapport à des agencements de rails conventionnels au moyen d'une pression de contact appliquée sur la garniture de friction (14b) au moyen du dispositif de freinage (21).

2. Agencement de rails (SA) selon la revendication 1, dans lequel une force de frottement, notamment plus élevée, est apte à être générée au moyen de la pression de contact appliquée sur la garniture de friction (14b) par le biais du dispositif de freinage (21).

3. Agencement de rails (SA) selon la revendication 1 ou 2, dans lequel
- le dispositif de freinage (21) présente une roue de friction (22) et/ou un élément de freinage (100), et
- la force de friction est apte à être générée au moyen d'une pression de contact appliquée sur la garniture de friction (14b) par l'intermédiaire de la roue de friction (22) et/ou de l'élément de freinage (100).

4. Agencement de rails (SA) selon l'une des revendications précédentes, dans lequel la garniture de friction (14b) est disposée ou est apte à être disposée en liaison par complémentarité de forme et/ou par force et/ou par matière sur ou dans une paroi latérale (14.1), tournée vers le dispositif de freinage (21), du rail de siège (14) solidaire du véhicule.

5. Agencement de rails (SA) selon l'une des revendications précédentes, dans lequel la garniture de friction (14b) est réalisée sous la forme d'un revêtement (B) disposé ou apte à être disposé sur la paroi latérale (14.1).

6. Agencement de rails (SA) selon l'une des revendications précédentes, dans lequel la garniture de friction (14b) est réalisée sous la forme d'un profilé ondulé (P_{w}) disposé ou apte à être disposé dans la paroi latérale (14.1).

7. Agencement de rails (SA) selon l'une des revendications précédentes, dans lequel la garniture de friction (14b) est réalisée sous la forme d'une couche granuleuse (K) disposée ou apte à être disposée sur la paroi latérale (14.1).

8. Agencement de rails (SA) selon la revendication 7, dans lequel la couche granuleuse (K) est appliquée sur une bande adhésive (14c) et la bande adhésive (14c) est appliquée sur la paroi latérale (14.1).

9. Agencement de rails (SA) selon l'une des revendications précédentes, dans lequel la garniture de friction (14b) est réalisée sous la forme d'une bande de matériau (14d) disposée ou apte à être disposée sur la paroi latérale (14.1) et présentant une surface de friction (14e).

10. Agencement de rails (SA) selon la revendication 9, dans lequel la bande de matériau (14d) présente en outre une surface rugueuse (14f).

11. Agencement de rails (SA) selon l'une des revendications précédentes, dans lequel la garniture de friction (14b) est réalisée sous la forme d'une bande métallique (14g) disposée ou apte à être disposée sur la paroi latérale (14.1).

12. Agencement de rails (SA) selon la revendication 11, dans lequel la bande métallique (14g) est une bande d'acier (14gs).

13. Agencement de rails (SA) selon la revendication 11, dans lequel la bande métallique (14g) est une bande d'aluminium (14g_{A}).

14. Agencement de rails (SA) selon l'une des revendications 11 à 13, dans lequel la bande métallique (14g) présente un profilage de surface (14h).

15. Siège de véhicule (1) comprenant une partie d'assise (3), un dossier (5) et un dispositif de réglage longitudinal (10) relié à la partie d'assise (3) et comportant un agencement de rails (SA) selon l'une des revendications précédentes.
